# EUROPEAN PATENT APPLICATION

(11) **EP 0 562 505 A1**
(43) Date of publication of application: **29.09.1993**
(21) Application number: 93104630.4
(22) Date of filing: 22.03.1993
(51) Int. Cl.: H02K 1/26, H02K 1/16

(54) **Process for lamination slot openings of electric machines**

(30) Priority: 24.03.1992 IT TO920254
(71) Applicant: ELETTROVAGO S.p.A., I-20032 Cormano, Milano (IT)
(72) Inventor: Criscuolo, Renato, I-20052 Monza (Milano) (IT)
(74) Representative: Lotti, Giorgio

(57) **Abstract**

A process for facilitating the winding of coils within the slots of a stack of laminations (10) used in electric machines. The laminations consist of ferromagnetic discs like soft iron provided with a plurality of radially disposed teeth (12) each having a pair of circumferentially disposed opposite peripheral tongues (13,13').

The process comprises the steps of:
a) prearranging a stack of laminations (10) before forming the winding, with the tongues (13,13') being bent with respect to the surface of each lamination (10);
b) pressing the bent tongues (13,13'), once the winding is formed, so as to flatten the tongues down to the level of the lamination surfaces.

After the process the openings "d" of the slots 14 will be considerably reduced to a width "d1.

## Description

The present invention falls within the field of induction electric machines, and more particularly relates to a process for facilitating the winding of the turns in the slots of a stack of laminations and obtaining, once windings have been terminated, slot openings that are advantageously inferior with respect to the diameter of the wire that is wound therein.

It is known that most of the electric machines of conventional type, both rotor or stator and armature windings are contained in slots that are disposed on the periphery of a pack or hollow cylinder of stacked magnetic laminations.

According to prior art devices, the opening of each slot is conditioned by the diameter of the wire that is introduced in the slot, and is increased by edge factors that are required by the winding machine for working at high speed (to cut down costs), without damaging the isolation enamel or the wire due to crashes or grazes while passing through the slot opening. It is stated that many winding machine manufacturers recommend not to design slot openings inferior to twice the diameter of the wire that is wound in the slots. For instance, a wire having a diameter of 1 mm requires a 2 mm minimum slot opening. According to another known technique, the slot opening has to let through the driver arm carrying the wire delivering needle and goes through the lamination stack during winding operations.

In this case, the opening of each slot is conditioned by the size of the needle that contains the wire and runs along the opening of the slot. Therefore, the opening of the slot must necessarily be wider than the needle to allow the machine to work at high speed without causing damage to the isolation enamel or to the needle itself.

It is also known that this need to oversize slot openings in both of the above mentioned techniques involves undesirable side effects, such as:
1) a high reluctance couple, owing to the fact that the slot opening represents a discontinuity in the magnetic circuit;
2) a loss of the utilizable flux, especially in machines where the slot openings form a considerable percentage of the lamination circumference, as the slot opening constitutes a high magnetic impedance path.

There are many cases in which points 1 and/or 2 cause unacceptable working conditions, due to noise for point 1 and efficiency problems relating to point 2.

Various methods are known which allow, with comprimises on costs and/or performance, to neutralize the above undesired effects (noise, inefficiency). Among these methods there is, with reference to point 1, the method of using "inclined slots".

An object of the invention is to provide a process for forming laminations that resolves the above stated problems, optimizing the costs/performance ratio and simultaneously resolves the problems outlined in points 1 and 2.

These and further objects and advantages, which will be more apparent hereinafter are attained by the invention by a process for facilitating the winding of coils within the slots of a stack of laminations (10) used in electric machines, of the type where the laminations each consist of a ferromagnetic disc provided with a plurality of radially disposed teeth each having a pair of circumferentially disposed opposite peripheral tongues that determine a plurality of winding retaining slots; characterised in that it comprises the steps of:
a) prearranging a stack of laminations before forming the winding, with said tongues bent with respect to the surface of each lamination;
b) pressing said bent tongues, once the winding is formed, so as to flatten the tongues down to the level of said surfaces.

Two preferred but not-limiting embodiments of the process according to the invention are described hereinafter with reference to the accompanying drawings, in which:
- fig. 1: is a plan view of a first type of lamination used in the process according to this invention;
- fig. 2: is a cross section on the line II-II of the lamination of fig. 1 in a first step of the process in object;
- fig. 3: is a view of the detail of fig. 2 in a successive step of the same process;
- fig. 4: is a plan view of a second type of lamination, alternative to the one of fig. 1;
- fig. 5: is a section on the line V-V of the lamination of fig. 4 in a first step of the process in object; and
- fig. 6: is a view of the same detail of fig. 5, shown in a successive step of the process.

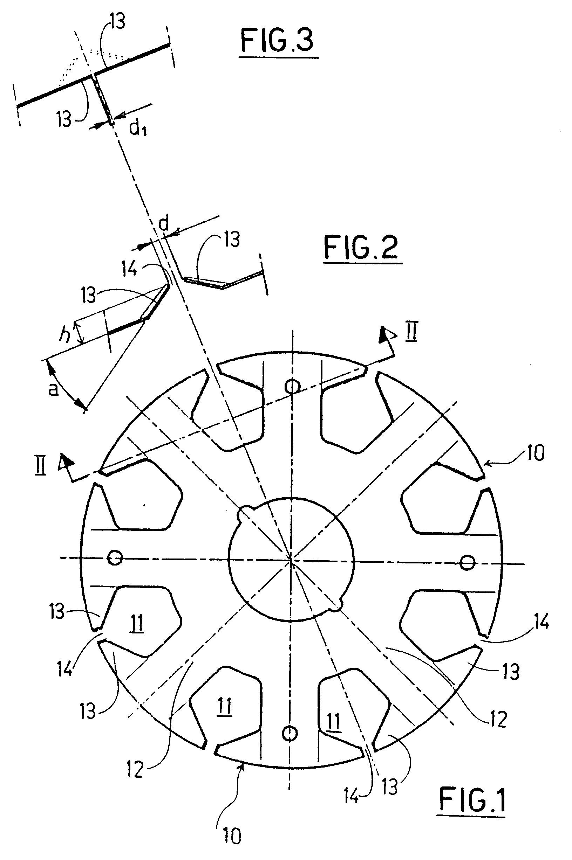

With reference to fig. 1, a first type of lamination indicated overall by numeral 10, is constituted by a variously shaped and perforated disc, made of a magnetic material such as soft iron.

Eight slots 11, substantially pentagonal in shape, are disposed at a constant angle on the periphery of the lamination 10. The slots 11 determine a series of radially disposed teeth 12 about the circumference of the lamination. Each tooth 12 has a substantially T shape with two opposite circumferentially disposed peripheral tongues 13. Each tongue is separated from the tongue of the adjacent tooth by a thin opening 14 that is the inlet to the corresponding slot 11.

As it is known, during the winding phase the laminations 10 are at first regularly stacked so as to line up the slots 11 according to the axis of the stack. Then windings are wound within the slots 11 of the lamination stack that is so formed, by introducing a copper wire (not shown) in the slots through the openings 14 or making the arm carrying the winding needle run along them.

According to the invention, this winding phase is preceded and followed by two further phases, as described hereinafter.

The laminations 10 are initially formed having their tongues 13 raised above the surface of the lamination (fig. 2). The tongues 13 form with said surface an angle "a" that gives the lamination slot openings 14 a width "d" which is sufficient to easily let through the wire or the arm carrying the needle during the winding phase.

The fold angle "a" and, consequently, the width "d" of openings 14 may vary according to design data, that are established by the diameter of the wire or arm carrying the needle. The width will be at least twice the wire or arm diameter, according to which winding technique is chosen.

Once the winding is completed, the process according to this invention provides that the lamination stack undergoes a pressing operation with consequent flattening of the tongues 13 on the surface of the relevant laminations (fig. 3).

Then, when this operation is done, the opening of the slot, which is represented by the projection of the width "d" of openings 14 on a plane, will be considerably reduced to a width "d1".

A flattened stack having a slot opening width "d1" as small as it is desired may be achieved by suitably sizing the tongues 13 and varying the fold angle "a".

In the case of a 1 mm wire diameter, the slot opening can be brought down to 0.8 mm, that is inferior to the diameter of the wire itself.

The above features can be easily attained by means of soft iron laminations, as this is a material with a very low springback.

The fold angle "a" will be advantageously chosen so as to allow an easy flattening of the fold by using a press with a suitable punch with known techniques. A preferred solution provides that the tongues 13 form an initial angle with the surface of the relevant lamination that ranges between 30° and 45°.

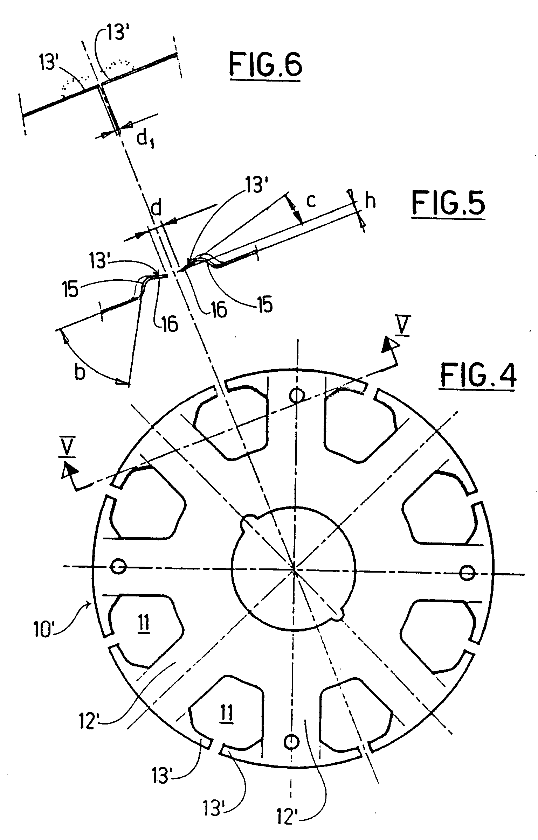

An alternative arrangement of the process of this invention is shown in figs. 4 to 6, wherein like parts have been indicated by like numerals, added with (').

In this solution, to facilitate the passage of the wire or the needle carrying arm during winding operations, the initial shape of the tongues 13' shows a double bend for the sake of reducing the increased bulk "h" during that phase. Referring to fig. 5, the tongues 13' have a first upwardly bent portion 15 that forms an angle "b" with the surface of the lamination 10, and a second portion 16 that has a bend which is opposite to the first bend and forms an angle "c" with said surface.

A preferred solution of this second embodiment provides "b" and "c" angles ranging between 60° and 15 °, respectively. As to the widths "d" and "d1", reference is made to the same values stated by way of example for the embodiment of figs. 1 to 3.

As it can be appreciated, the process according to this invention overcomes the above indicated prior art inconveniences. Moreover, it has the advantage of cutting down winding formation time as it is possible to use a machine working at an increased speed avoiding interference between the wire or the arm carrying the needle and the lamination teeth.

The invention is not limited to the aforegoing description and drawings, which are to be considered purely as an illustration of the best method of implementing the equipment. Modifications are possible in the terms of the shape, dimensions and arrangement of the parts and of the constructional details.

## Claims

1. A process for facilitating the winding of coils within the slots of a stack of laminations (10) used in electric machines, of the type where the laminations each consist of a ferromagnetic disc provided with a plurality of radially disposed teeth (12) each having a pair of circumferentially disposed opposite peripheral tongues (13,13') that determine a plurality of winding retaining slots (11); characterised in that it comprises the steps of:
a) prearranging a stack of laminations (10) before forming the winding, with said tongues (13,13') bent with respect to the surface of each lamination (10);
b) pressing said bent tongues (13,13'), once the winding is formed, so as to flatten the tongues down to the level of said surfaces.

2. A process according to claim 1, characterised in that during step (a) the bent tongues (13) are substantially straight and inclined with respect to said surfaces.

3. A process according to claim 1, characterised in that during step (a) the tongues (13') are bent so as to assume a waved shape.

4. A process according to claim 2, characterised in that during step (a) the tongues (13) form an angle ranging between 30° and 40° with said lamination surface.

5. A process according to claim 3, characterised in that during step (a) the tongues (13') form a double bend with respect to the surfaces of the relevant laminations (10).

6. A process according to claim 1, characterised in that during step (a) the gap (d) between two adjacen tongues (13,13') is more than twice the diameter of the wire forming the winding.

7. A process according to claim 1, characterised in that during step (b) the gap between two adjacent tongues is inferior to the diamenter of the wire forming the winding.

8. A stack of laminations (10) characterised in that wire is wound in the slots (11) thereof following a process according to the previous claims.

9. A stack of laminations (10) according to claim 8, characterised in that after the winding is formed, the width (d,d1) of the gap between two adiacent tongues (13,13') belonging to the same lamination (10) is inferior to the diameter of the wire.
